Europäisches Patentamt

European Patent Office

Office européen des brevets

(11) Numéro de publication: **0 241 382 B1**

(12) ## FASCICULE DE BREVET EUROPEEN

(45) Date de publication du fascicule du brevet:
28.06.89

(51) Int. Cl.⁴: **F16H 1/445**, B60K 17/20

(21) Numéro de dépôt: 87400811.3

(22) Date de dépôt: 09.04.87

(54) Pont arrière pour véhicule à quatre roues motrices.

(30) Priorité: 10.04.86 FR 8605140

(43) Date de publication de la demande:
14.10.87 Bulletin 87/42

(45) Mention de la délivrance du brevet:
28.06.89 Bulletin 89/26

(84) Etats contractants désignés:
DE GB IT

(56) Documents cités:
DE-B- 1 068 567
DE-B- 1 085 046
FR-A- 1 001 390
FR-A- 2 530 766

(73) Titulaire: AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Froumajou, Armand, 11 Bis, rue Docteur
Laennec, F-95520 Osny(FR)

(74) Mandataire: Moncheny, Michel et al, c/o Cabinet
Lavoix 2 Place d'Estienne d'Orves, F-75441 Paris
Cedex 09(FR)

## Description

La présente invention concerne des ponts arrière de véhicules automobiles et, de façon plus précise un pont arrière destiné à équiper un véhicule pouvant fonctionner soit avec les deux roues avant motrices, soit avec quatre roues motrices.

On connaît déjà de tels véhicules pouvant fonctionner soit avec deux roues motrices, soit avec les quatre roues motrices ,comportant un pont avant et un pont arrière munis chacun d'un différentiel et, le cas échéant, un troisième différentiel dit " interponts ", des moyens étant par ailleurs prévus pour réaliser ou couper à volonté la transmission en direction des roues arrière. D'une façon générale, ces moyens sont incorporés au groupe moto-propulseur ou au différentiel interponts ou encore à une boîte transfert disposée entre l'essieu avant et l'essieu arrière. Ces moyens de coupure pouvant être constitués par un crabotage sont donc situés, dans les agencements connus, au voisinage de la ligne de transmission longitudinale où se trouvent déjà de nombreux obstacles : à l'avant crémaillère de direction et traverses de suspension avant, à l'arrière traverses de suspension arrière. L'implantation s'en trouve donc compliquée et différente selon que l'on réalise un véhicule à deux roues motrices ou un véhicule à quatre roues motrices, ce qui, d'une part, augmente les coûts et, d'autre part, empêche de passer facilement d'un véhicule à deux roues motrices à un véhicule à quatre roues motrices.

Il est par ailleurs connu (par ex. de FR-A 1 001 390) de couper à volonté la transmission en direction des roues arrière par des dispositifs de crabotage agencés sur les deux arbres de transmission transversaux reliés à ces roues, de préférence au droit de chacun des deux organes de sortie du différentiel associé. Cette disposition est particulièrement coûteuse et encombrante car elle comporte deux dispositifs de crabotage et un mécanisme de commande muni d'un système d'armement permettant un léger décalage entre les deux crabotages. Cet ensemble prend place dans un boîtier nécessairement volumineux et spécifique pour les véhicules à roues arrière àlternativement libres ou motrices.

Le but de cette invention est précisément de proposer un agencement qui soit simple.et offre une grande souplesse d'adaptation, notamment dans la conception d'un véhicule à deux ou quatre roues motrices.

Ce résultat est obtenu avec un pont arrière de véhicule automobile, comprenant, d'une part, un carter principal dans lequel est logé un mécanisme différentiel comportant un organe d'entrée entraîné par un arbre de transmission longitudinal, et deux organes de sortie coaxiaux, reliés à deux arbres de transmission transversaux, d'autre part, des moyens d'accouplement étant commandés de façon à rendre selectivement les roues arrière simultanément libres ou simultanément motrices. Ce pont est caractérisé en ce que l'un des organes de sortie étant accouplé en permanence au premier des deux arbres de transmission transversaux, l'autre organe de sortie est accouplé à un tronçon d'arbre qui traverse une partie du carter principal et dont une extrémité située hors de ce dernier est propre à être accouplée au second arbre de transmission transversal par des moyens d'accouplement logés dans un carter auxiliaire fixé au carter principal.

Suivant d'autres caractéristiques :
- les moyens d'accouplement comprennent un manchon baladeur constamment solidaire en rotation du second arbre de transmission et pouvant occuper au moins deux positions, une première position dans laquelle il est dégagé dudit tronçon d'arbre,et une deuxième position dans laquelle il est également solidaire en rotation de ce tronçon ;
- le manchon baladeur peut occuper une troisième position dans laquelle il est solidaire en rotation du second arbre de transmission, du tronçon d'arbre et d'un autre élément, tel l'organe d'entrée du différentiel ;
- le manchon baladeur comporte des cannelures intérieures qui coopèrent en permanence avec des cannelures extérieures prévues sur un manchon solidaire du second arbre de transmission, et le tronçon d'arbre est également muni de cannelures extérieures avec lesquelles peuvent coopérer les cannelures intérieures du manchon baladeur ;
- l'organe d'entrée du mécanisme différentiel est un boîtier porte-satellites solidaire d'une couronne, cet organe d'entrée comportant un prolongement axial muni de cannelures adaptées pour coopérer avec les cannelures internes du manchon baladeur ;
- le manchon baladeur est disposé entre un pre mier palier par lequel le carter principal porte une extrémité du boîtier de différentiel et un second palier par lequel le carter auxiliaire porte l'arbre de transmission équipé du manchon baladeur.

L'invention va être décrite plus en détail ci-dessous en se référant au dessin annexé, donné à titre d'exemple et sur lequel :

- la Fig.1 est une vue en coupe d'un pont arrière suivant l'invention ;
- les Fig.2 et 3 sont deux vues de détail montrant ce pont arrière dans deux autres états.

Un pont arrière suivant l'invention comprend un carter principal 1 dans lequel est logé un mécanisme différentiel 2 de conception classique. Ce mécanisme différentiel comprend un boîtier porte-satellites 3 solidaire d'une couronne 4. L'ensemble formé du boîtier et de la couronne constitue l'organe d'entrée du mécanisme différentiel, entraîné par un arbre de transmission longitudinal 5 lui-même relié au groupe moto-propulseur disposé à l'avant du véhicule et non représenté.

Le différentiel comprend également deux planétaires 6, 7 qui sont en prise avec des satellites 8,9 et qui constituent les organes de sortie du différentiel.

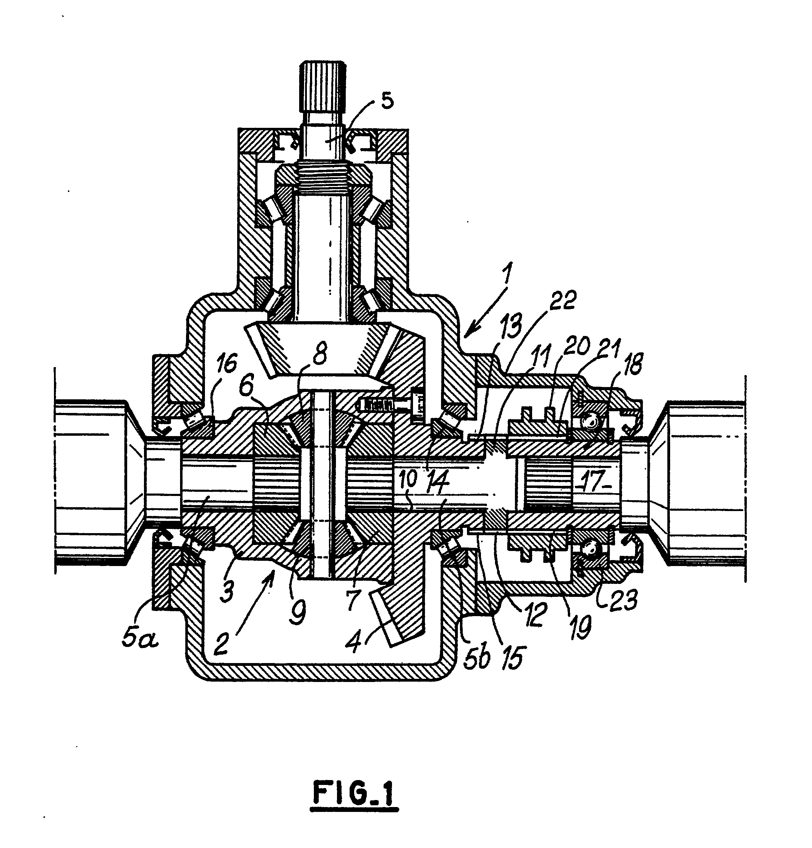

Le planétaire 6 disposé à gauche sur la Fig.1 est solidaire en rotation, de façon classique, d'un arbre de transmission 5a relié à la roue arrière gauche du véhicule.

Le planétaire 7 disposé à droite sur cette même Fig.1 est solidaire en rotation d'un tronçon d'arbre 5b qui s'étend dans un orifice 10 de la couronne et comporte au voisinage de son extrémité opposée au

planétaire une collerette II munie de cannelures extérieures 12.

La couronne 4 comporte un prolongement axial étagé 13 qui, d'une part, reçoit un palier 14 du carter 1 et, d'autre part délimite des cannelures extérieures 15 identiques aux cannelures 12. L'ensemble formé du boîtier porte-satellites et de la couronne est par ailleurs supporté par un deuxième palier 16.

Un deuxième arbre de transmission 17 relié à la roue arrière droite du véhicule porte à son extrémité proche du différentiel un manchon 18 qui en est solidaire et qui comporte des cannelures extérieures 19 identiques aux cannelures 12 et 15. Sur ces cannelures extérieures 19 est monté coulissant un manchon baladeur 20 comportant des cannelures intérieures 21 et qui peut être déplacé axialement par des moyens connus, non représentés. Ce manchon baladeur est logé dans un carter auxiliaire 22 fixé sur le carter principal 1 et qui comporte par ailleurs un palier 23 supportant l'arbre de transmission 17.

Le fonctionnement d'un tel dispositif est le suivant : dans la position du manchon baladeur 20 représentée sur la Fig.1, le planétaire 7 solidaire du tronçon d'arbre 5b est désolidarisé de l'arbre de transmission associé 17, de sorte qu'aucun des deux arbres 5a,17 n'est entraîné par le boîtier porte-satellites 3 ; les deux roues arrière tournent ainsi librement : la roue droite avec l'arbre 17, et la roue gauche avec l'arbre 5a, les engrenages 6,8,7 du différentiel , et le tronçon d'arbre 5b.

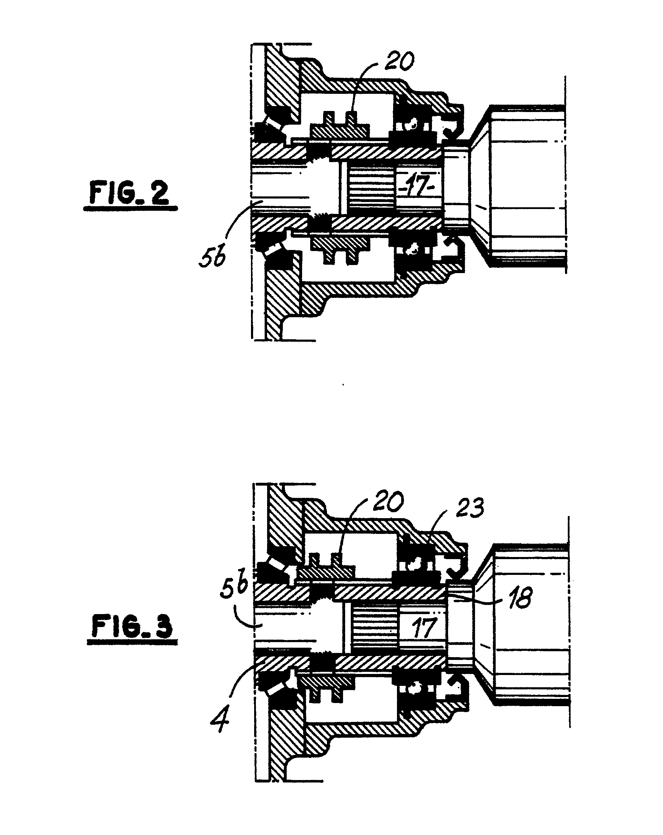

Si ce manchon baladeur est amené dans la position représentée sur la Fig.2, il rend solidaires en rotation le tronçon d'arbre 5b et l'arbre de transmission 17. Le pont est alors enclenché et le différentiel fonctionne normalement.

Enfin, lorsque le manchon baladeur est déplacé jusqu'à sa position représentée sur la Fig.3, il rend solidaire en rotation la couronne 4, le planétaire 7 et l'arbre de transmission 17, de sorte que le différentiel est bloqué, les roues arrière étant alors motrices mais sans effet de différentiel.

Le résultat recherché est donc obtenu de façon simple et efficace. Les moyens d'accouplement étant accolés directement au carter du différentiel, leur encombrement est particulièrement faible et leur implantation ne pose aucun problème.

De plus, ce pont est réalisé avec une certaine symétrie par rapport à un plan longitudinal, de sorte qu'il peut être utilisé dans des configurations différentes, moyennant des adaptations très simples. C'est ainsi que pour aménager un essieu arrière à roues en permanence motrices, il suffit d'utiliser une couronne ne comportant pas de prolongement cannelé 15, et de relier directement l'arbre de transmission 17 au planétaire 7, le côté correspondant du carter principal 1 étant alors complété comme représenté sur la partie gauche de la Fig.1.

Le carter auxiliaire 22 et le dispositif d'accouplement entre l'arbre de transmission et le planétaire associé peuvent être disposés indifféremment d'un côté ou de l'autre du carter principal. Ceci permet en particulier d'utiliser des arbres de transmission 5a et 17 identiques puisque la possibilité est offerte de décaler le pont latéralement du côté le plus favorable pour l'implantation de l'arbre de transmission longitudinal.

## Revendications

1 - Pont arrière de véhicule automobile comprenant d'une part, un carter principal (1) dans lequel est logé un mécanisme différentiel (2) comportant un organe d'entrée (3,4) entraîné par un arbre de transmission longitudinal (5), et deux organes de sortie coaxiaux (6,7) reliés à deux arbres de transmission transversaux (5a, 17), et, d'autre part, des moyens d'accouplement commandés de façon à rendre sélectivement les roues arrière simultanément libres ou simultanément motrices, caractérisé en ce que l'un (6) des organes de sortie étant accouplé en permanence au premier (5a) des deux arbres de transmission transversaux, l'autre organe de sortie (7) est accouplé à un tronçon d'arbre (5b) qui traverse une partie du carter principal et dont une extrémité située hors de ce dernier est propre à être accouplée au second arbre de transmission transversal (17) par des moyens d'accouplement logés dans un carter auxiliaire (22) fixé au carter principal (1).

2 - Pont arrière suivant la revendication 1, caractérisé en ce que les moyens d'accouplement comprennent un manchon baladeur (20) constamment solidaire en rotation du second arbre de transmission (17) et pouvant occuper au moins deux positions, une première position dans laquelle il est dégagé du tronçon d'arbre (5b), et une deuxième position dans laquelle il est également solidaire en rotation de ce tronçon.

3 - Pont arrière suivant la revendication 2, caractérisé en ce que le manchon baladeur (20) peut occuper une troisième position dans laquelle il est solidaire en rotation du second arbre de transmission (17), du tronçon d'arbre (5b), et d'un autre élément, tel l'organe d'entrée (3, 4), du différentiel.

4 - Pont arrière suivant l'une des revendications 2 ou 3, caractérisé en ce que le manchon baladeur (20) comporte des cannelures intérieures (21) qui coopèrent en permanence avec des cannelures extérieures (19) **prévues** sur un manchon (18) solidaire du second arbre de transmission (17) et le tronçon d'arbre (5b) est également muni de cannelures extérieures (12) avec lesquelles peuvent coopérer les cannelures intérieures du manchon baladeur.

5 - Pont arrière suivant l'une des revendications 2 à 4, caractérisé en ce que l'organe d'entrée (3,4) du mécanisme différentiel est un boîtier porte-satellites (3) solidaire d'une couronne (4), cet organe d'entrée comportant un prolongement axial (13) muni de cannelures (15) adaptées pour coopérer avec les cannelures internes du manchon baladeur (20).

6 - Pont arrière suivant l'une quelconque des revendications 4 et 5, caractérisé en ce que le tronçon d'arbre (5b) solidaire de l'organe de sortie (7) du différentiel comporte une collerette cannelée (12) disposée entre le second arbre de transmission (17) et le prolongement axial (13) de l'organe d'entrée (3,4) du différentiel.

7 - Pont arrière suivant l'une quelconque des revendications 2 à 6, caractérisé en ce que le second arbre de transmission (17) porte à son extrémité proche du différentiel un manchon (18) dont il est solidaire et qui comporte des cannelures extérieures (19) avec lesquelles coopère le manchon baladeur.

8 - Pont arrière suivant l'une quelconque des revendications 2 à 7, caractérisé en ce que le manchon baladeur (20) est disposé entre un premier palier (14) par lequel le carter principal porte une extrémité du boîtier de différentiel et un second palier (23) par lequel le carter auxiliaire (22) porte le second arbre de transmission (17) équipé du manchon baladeur.

## Patentansprüche

1. Hinterachse für Kraftfahrzeuge mit einerseits einem Hauptgehäuse (1) in dem ein Differentialmechanismus (2), der ein Eingangsorgan (3, 4) aufweist, das von einer Längsgetriebewelle oder Längstransmissionswelle (5) mitgenommen wird, und zwei koaxiale Ausgangsorgane (6, 7) aufweist, die mit zwei querverlaufenden Transmissionswellen (5a, 17) verbunden sind, und andererseits Kupplungseinrichtungen aufweist, die derart betätigt sind, um wahlweise die Hinterräder gleichzeitig frei oder gleichzeitig antreibend zu machen, dadurch gekennzeichnet, daß eines (6) der Ausgangsorgane ständig mit der ersten (5a) der beiden querverlaufenden Transmissionswellen gekuppelt ist, das andere Ausgangsorgan (7) an einen Wellenstumpf (5b) gekuppelt ist, der einen Bereich des Hauptgehäuses durchquert und dessen eines Ende außerhalb von diesem angeordnet ist und geeignet ist, mit der zweiten querverlaufenden Transmissionswelle (17) durch Kupplungseinrichtungen gekuppelt zu werden, die in einem Zusatzgehäuse (22) angeordnet sind, das an dem Hauptgehäuse (1) befestigt ist.

2. Hinterachse nach Anspruch 1, dadurch gekennzeichnet, daß die Kupplungseinrichtungen eine bewegliche Muffe (20) aufweisen, die ständig zusammen mit der zweiten Transmissionswelle (17) dreht und wenigstens zwei Stellungen einnehmen kann, eine erste Stellung in der sie von dem Wellenstumpf (5b) befreit ist, und eine zweite Stellung in der sie ebenfalls zusammen mit dem Wellenstumpf dreht.

3. Hinterachse nach Anspruch 2, dadurch gekennzeichnet, daß die bewegliche Muffe (20) eine dritte Stellung einnehmen kann, in der sie zusammen mit der zweiten Transmissionswelle (17), dem Wellenstumpf (5b) und einem weiteren Element, wie dem Eingangsorgan (3, 4) des Differentials dreht.

4. Hinterachse nach Anspruch 2 oder 3, dadurch gekennzeichnet, daß die bewegliche Muffe (20) innere Kanäle (21) aufweist, die ständig mit äußeren Kanälen (19) zusammenwirken, die auf einer Muffe (18) angeordnet sind, die einstückig mit der zweiten Transmissionswelle (17) und dem Wellenstumpf (5b) ausgebildet ist und ebenfalls mit äußeren Kanälen (12) versehen ist, mit denen die inneren Kanäle der beweglichen Muffe zusammenwirken können.

5. Hinterachse nach einem der Ansprüche 2 bis 4, dadurch gekennzeichnet, daß das Eingangsorgan (3, 4) des Differentialmechanismus ein Satellitenträgergehäuse (3) ist, das mit einem Kranz (4) verbunden ist, wobei das Eingangsorgan eine axiale Verlängerung (13) aufweist, die mit Kanälen (15) versehen ist, die geeignet sind, mit den inneren Kanälen der beweglichen Muffe (20) zusammenzuwirken.

6. Hinterachse nach Anspruch 4 oder 5, dadurch gekennzeichnet, daß der Wellenstumpf (5b), der mit dem Ausgangsorgan (7) des Differentials verbunden ist einen mit Kanälen versehenen Kragen (12) aufweist, der zwischen der zweiten Transmissionswelle (17) und der axialen Verlängerung (13) des Eingangsorgans (3, 4) des Differentials angeordnet ist.

7. Hinterachse nach einem der Ansprüche 2 bis 6, dadurch gekennzeichnet, daß die zweite Transmissionswelle (17) an ihrem Ende in der Nähe des Differentials eine Muffe (18) trägt, mit der sie verbunden ist, und welche äußere Kanäle (19)

8. Hinterachse nach einem der Ansprüche 2 bis 7, dadurch gekennzeichnet, daß die bewegliche Muffe (20) angeordnet ist zwischen einem ersten Lager (14), mit dem das Hauptgehäuse ein Ende des Gehäuses des Differentials trägt und einem zweiten Lager (23), mit dem das Hilfsgehäuse (22) die zweite Transmissionswelle (17) trägt, die mit der beweglichen Muffe versehen ist.

## Claims

1. A motor vehicle rear axle stay comprising: a main casing (1) receiving a differential mechanism (2) comprising an input member (3, 4) driven by a longitudinal transmission shaft (5); two coaxial output members (6, 7) connected to two transverse transmission shafts (5a, 17); and coupling means so controlled as to render the rear wheels simultaneously free or simultaneously driving, characterized in that one (6) of the output members always being coupled to the first (5a) of the two transmission shafts, the other member (7) is coupled to a shaft end (5b) which extends through a portion of the main casing and one end of which disposed outside the latter is adapted to be coupled to the second transmission shaft (17) via coupling means received in an auxiliary casing (22) attached to the main casing (1).

2. A rear axle stay according to claim 1, characterized in that the coupling means comprise a sliding sleeve (20) always connected for corotation to the second transmission shaft (17) and adapted to occupy at least two positions, a first position in which it is disengaged from the shaft end (5b), and a second position in which it is also connected thereto for corotation.

3. A rear axle stay according to claim 2, characterized in that the sliding sleeve (20) can occupy a third position in which it is connected for corotation to the second transmission shaft (17), the shaft end (5b), and another element, such as the input member (3, 4) of the differential.

4. A rear axle stay according to claims 2 or 3, characterized in that the sliding sleeve (20) comprises internal splines (21) which always cooperate with external splines (19) provided on a sleeve (18) connected to the second transmission shafts (17) and the shaft end (5b) is also formed with external splines (12) with which the internal splines of the sliding sleeve cooperate.

5. A rear axle stay according to any of claims 2 to 4, characterized in that the input member (3, 4) of the differential mechanism is a satellite-carrying casing (3) connected to a ring (4), the input member comprising an axial prolongation (13) formed with splines (15) adapted to cooperate with the internal splines of the sliding sleeve (20).

6. A rear axle stay according to claims 4 or 5, characterized in that the shaft end (5b) connected to the output member (7) of the differential comprises a splined collar (12) disposed between the second transmission shaft (17) and the axial prolongation (13) of the input member (3, 4) of the differential.

7. A rear axle stay according to any of claims 2 to 6, characterized in that the second transmission shaft (17) bears at its end adjacent the differential a sleeve (18) to which it is connected and which comprises external splines (19) with which the sliding sleeve cooperates.

8. A rear axle stay according to any of claims 2 to 7, characterized in that the sliding sleeve (20) is disposed between a first bearing (14) via which the main casing bears one end of the casing of the differential and a second bearing (23) via which the auxiliary casing (22) bears the second transmission shaft (17) equipped with the sliding sleeve.

**EP 0 241 382 B1**

## FIG_1

**FIG. 2**

**FIG. 3**